# EUROPÄISCHE PATENTSCHRIFT

(11) **EP 1 864 071 B1**
(45) Veröffentlichungstag und Bekanntmachung des Hinweises auf die Patenterteilung: **17.11.2010**
(21) Anmeldenummer: 06723696.8
(22) Anmeldetag: 24.03.2006
(51) Int. Cl.: F28F 25/08, F28F 21/06, F24F 6/04, B01J 19/32

(54) **KONTAKTKÖRPER FÜR EINEN VERDUNSTUNGSBEFEUCHTER ODER STOFFAUSTAUSCHER UND VERDUNSTUNGSBEFEUCHTER ODER STOFFAUSTAUSCHER**
CONTACT BODY FOR AN EVAPORATION HUMIDIFIER OR MATERIAL EXCHANGER
CORPS DE CONTACT POUR UN HUMIDIFICATEUR A EVAPORATION OU ECHANGEUR DE SUBSTANCES ET HUMIDIFICATEUR A EVAPORATION OU ECHANGEUR DE SUBSTANCES CORRESPONDANTS

(30) Priorität: 26.03.2005 DE 20504859 U
(43) Veröffentlichungstag der Anmeldung: 12.12.2007
(73) Patentinhaber: GEA 2H Water Technologies GmbH, 48493 Wettringen (DE)
(72) Erfinder: HAGEMANN, Helgo, 48607 Ochtrup (DE); WOLBECK, Ralf, 48607 Ochtrup (DE)
(74) Vertreter: Linnemann, Winfried
(86) Internationale Anmeldenummer: PCT/EP2006/002715
(87) Internationale Veröffentlichungsnummer: WO 2006/103028

(56) Entgegenhaltungen:
- EP-A- 0 554 471
- DE-A1- 2 831 639
- DE-A1- 3 905 696
- DE-U1- 8 814 542
- GB-A- 1 496 127

## Beschreibung

Die vorliegende Erfindung betrifft einen Kontaktkörper für einen Verdunstungsbefeuchter oder Stoffaustauscher für die Befeuchtung, Kühlung und/oder Reinigung von Gasen, wobei der Kontaktkörper aus einer Vielzahl von gewellten Materiallagen besteht, die aneinander anliegen und so eine Raumgitterstruktur bilden, wobei durch den Kontaktkörper einerseits von oben her eine Flüssigkeit hindurchleitbar und andererseits im Kreuzstrom zur Flüssigkeit ein Gasstrom unter dessen Befeuchtung, Kühlung und/oder Reinigung hindurchleitbar ist. Ein derartiger Kontaktkörper ist z.B aus der DE-A1-3 905 696 bekannt. Außerdem betrifft die Erfindung einen Verdunstungsbefeuchter oder Stoffaustauscher mit mindestens einem Kontaktkörper.

Verdunstungsbefeuchter und Stoffaustauscher für den eingangs genannten Zweck sowie Kontaktkörper dafür sind aus der praktischen Verwendung bekannt. Verdunstungsbefeuchter oder Stoffaustauscher der genannten Art werden unter anderem zur Luftbefeuchtung und gleichzeitigen Luftkühlung beispielsweise von Wohn- oder Bürogebäuden, Lagerhallen, Gewächshäusern, Stallungen und anderen Räumen oder auch von technischen Anlagen, für die Entstaubung von Zu- oder Abluft und für eine reaktive Gas- oder Luftreinigung, z.B. die Entfernung von Geruchsstoffen, wie Ammoniak, aus Stallabluft, eingesetzt. Die nebeneinander angeordneten, den Kontaktkörper bildenden gewellten Materiallagen weisen im Verhältnis zu dem vom Kontaktkörper eingenommenen Volumen eine große Oberfläche auf, die durch das Beschicken des Kontaktkörpers mit Flüssigkeit benetzt wird. Mittels des durch den Kontaktkörper im Kreuzstrom zur Flüssigkeit hindurchströmenden Gasstroms wird dann eine Verdunstung der Flüssigkeit erzielt, wodurch der Gasstrom befeuchtet und infolge der physikalisch zwangsläufig auftretenden Verdunstungskälte gleichzeitig gekühlt wird. Feststoffpartikel, wie Staubteilchen, aus dem Gasstrom werden in der Flüssigkeit gebunden und so aus dem Gasstrom entfernt. Außerdem können im Kontaktkörper chemische Reaktionen zwischen Substanzen im Gasstrom und der Flüssigkeit oder der Flüssigkeit zugesetzten Substanzen hervorgerufen werden bzw. ablaufen, die einen gewünschten chemischen Effekt, z.B. Reinigungseffekt, haben.

Bei den aus der Praxis bekannten Kontaktkörpern verlaufen die Wellenachsen in den einzelnen Materiallagen geradlinig von einer Längskante zur anderen Längskante jeder Materiallage, was den Vorteil einer einfachen Herstellung oder Materiallagen hat, jedoch nachteilig dazu führt, daß die den Kontaktkörper durchströmende Luft einen sehr geringen Strömungswiderstand erfährt und dadurch mit einer hohen Strömungsgeschwindigkeit und dementsprechend einer kurzen Verweildauer den Kontaktkörper durchströmt. Außerdem erlaubt ein Kontaktkörper mit derart einfach gewellten Materiallagen einen Lichtdurchtritt in Längsrichtung der Wellenachsen durch die Materiallagen, was bei manchen Anwendungen, insbesondere in Stallungen mit einem künstlichen Tag-Nacht-Rhythmus, störend und unerwünscht ist.

Für die gewellten Materiallagen sind für Kontaktkörper der vorstehend genannten Art und für die beschriebenen Verwendungszwecke aus der Praxis zwei Materialien bekannt. Das erste Material ist ein Papier, das durch eine Imprägnierung einerseits benetzbar und andererseits versteift ist, so daß sich der daraus gefertigte Kontaktköper selbst trägt. Außerdem soll die Imprägnierung den Zerfall des Kontaktkörpers unter der Einwirkung von Wasser und Luft verhindern. Papier als Ausgangsmaterial ist sehr preisgünstig, jedoch hat sich in der Praxis gezeigt, daß trotz der Imprägnierung ein Kontaktkörper aus diesem Material nur eine relativ begrenzte Stabilität und Haltbarkeit hat. Dies führt dazu, daß relativ oft eine Erneuerung des Kontaktkörpers erforderlich wird. Außerdem ist dieses Material nicht säurefest, sodaß eine Reinigung des Kontaktkörpers mit einer Säure, z.B. eine Entkalkung mittels Ameisen- oder Zitronensäure, nicht möglich ist. Die geringe mechanische Stabilität dieses Materials schließt zudem eine Reinigung des Kontaktkörpers mit einem Hochdruckwasserstrahl aus, weil dies zu einer unmittelbaren Zerstörung des Papiers führen würde. In der Praxis werden deshalb bei Kontaktkörpern aus Papier selbst bei geringen Belastungen nur relativ kurze Einsatzzeiten erreicht.

Als zweites Material für die gewellten Materiallagen ist aus der einschlägigen Praxis ein Glasfasermaterial bekannt, das anorganisch, korrosionsbeständig, hygroskopisch und unbrennbar ist. Bei diesem Material ist zwar eine längere Haltbarkeit und Stabilität zu erwarten, jedoch wird dies mit einem hohen Kostenaufwand für das Material erkauft.

Ein Nachteil der bekannten Kontaktkörper besteht weiterhin darin, daß eine üblicherweise verwendete Verklebung der Materiallagen aus den vorgenannten Materialien miteinander nicht dauerhaft haltbar ist. Insbesondere in Kontaktkörpern, die im Intervallbetrieb eingesetzt werden, also zeitweise feucht oder naß und zeitweise trocken sind, werden die Lagenmaterialien im Bereich der Klebeverbindungen besonders belastet und verlieren relativ schnell ihre Verbindung zum Klebstoff. Im ungünstigsten Fall führt dies zu einem Zerfallen des Kontaktkörpers und damit zu seiner Unbrauchbarkeit. Auch Säuren sind hier meist schädlich für die Verklebung der Materiallagen.

Die DE 28 31 639 C2 zeigt eine Plattenbatterie für Stoff- und Wärmetauscher und Tropfenabscheider, mit einer Mehrzahl von gegeneinandergesetzten, gewellten Platten, deren Wellentäler sich kreuzende Strömungskanäle bilden, wobei bei benachbarten Platten die Wellkämme sich berühren oder mit Spaltabstand gegeneinandergesetzt sind und in den Strömungskanälen strömungsbeeinflussende Einbauten vorhanden sind. Weiter ist hier vorgesehen, daß in den Strömungskanälen Querwände angeordnet sind, die Wellenkämmen der jeweils benachbarten Platten, berührend oder mit Spaltabstand, zugeordnet sind, und daß dadurch aus den Strömungskanalabschnitten benachbarter Platten gleichsam dreidimensional zickzackförmige Strömungswege gebildet sind. Die Platten können aus Kunststoff bestehen und durch Tiefziehen geformt sein.

Als nachteilig wird bei dieser bekannten Plattenbatterie angesehen, daß die Wellungen jeweils gradlinige und über die volle Dicke der Plattenbatterie durchlaufende Wellenachsen aufweisen. Damit die Luft, die die Plattenbatterie durchströmt, nicht mit einer zu kurzen Verweilzeit und zu hohen Geschwindigkeit hindurchströmt, müssen die zusätzlichen Querwände im Inneren der Plattenbatterie angeordnet werden, was deren Fertigung aufwendig macht. Zudem besteht bei der durchgehend geradlinigen Anordnung der Wellenachsen ein hohes Risiko, daß von oben her in die Plattenbatterie zugeführte Flüssigkeit zur Vorderseite und Hinterseite der Plattenbatterie, das heißt zur Luftanströmseite und zur Luftabströmseite, und damit aus dieser heraus geleitet wird, wodurch dieser Teil der Flüssigkeit praktisch nicht mehr für einen Austausch mit dem Luftstrom zur Verfügung steht.

Die DE 26 07 312 B2 zeigt eine Vorrichtung zur Befeuchtung von durch eine Kammer strömender Luft, bestehend aus einer Anzahl in der Kammer angebrachter Kontaktkörper für Wasser und Luft, die aus Anzahl paralleler, gewellter Platten bestehen, die mit in vertikaler Richtung strömenden Wasser begossen und mit Hilfe von Abstandsmitteln zwecks Ermöglichung des Strömens der Luft in horizontaler Richtung.zwischen den Platten voneinander getrennt sind. Dabei ist vorgesehen, daß die Faltungen der Kontaktplatten im wesentlichen vertikal verlaufen, wobei deren Faltenhöhen so gering und deren Faltenfolge so kurz ist, daß das den Platten zugeführte Wasser infolge der Kapillarkraft auf nahezu der gesamten Plattenoberfläche zurückgehalten wird, und daß die Abstandsmittel aus gewellten Stützplatten bestehen, deren Faltungen im wesentlichen horizontal verlaufen. Mit dieser Vorrichtung soll insbesondere das Problem gelöst werden, ein Mitreißen von Wassertropfen durch die durch die Vorrichtung strömende Luft zu vermeiden. Das Material in den Kontaktplatten kann entweder hygroskopisch, zum Beispiel Papier, oder nichthygroskopisch, zum Beispiel Metall oder Kunststoff, sein.

Als nachteilig wird bei dieser Vorrichtung angesehen, daß das Wasser aufgrund der vertikal verlaufenden Strömungswege sehr schnell durch die Vorrichtung hindurchfließt und somit eine nur kurze Verweilzeit in der Vorrichtung hat. Das gleiche gilt für den die Vorrichtung durchsetzenden Luftstrom, der auf gradlinigen horizontalen Strömungswegen mit geringem Strömungswiderstand und entsprechend hoher Strömungsgeschwindigkeit durch die Vorrichtung hindurchtritt. Damit hat auch der Luftstrom nur eine ungünstig kurze Verweilzeit innerhalb der Vorrichtung. Damit ist die Leistungsfähigkeit der Vorrichtung hinsichtlich der gewünschten Luftbefeuchtung relativ niedrig.

Aus der EP 0 554 471 B1 ist ein Einbauelement für Wärmetauscher-, Stoffaustauscher- oder Bioreaktor-Systeme bekannt, wobei das Element entlang von darin gebildeten Strömungswegen von zwei in Austausch oder Reaktion miteinander tretenden fluiden Medien in Gegen- oder Kreuzgegenstrom durchströmbar ist, wobei das Element eine Eintrittsseite und eine Austrittsseite für das erste Medium und eine Eintrittsseite und eine Austrittsseite für das zweite Medium aufweist, wobei das Element aus mindestens zwei aufeinander befestigten Wänden aus thermoplastischer Kunststofffolie besteht, wobei die Wände jeweils als gewellte Flächen mit im wesentlichen parallel laufenden Scheitelbereichen und Sohlenbereichen gestaltet sind, wobei in den Scheitel- und Sohlenbereichen Befestigungsstellen angeordnet sind und wobei zwei benachbarte, aufeinander befestigte Wände derart zueinander angeordnet sind, daß die Ausrichtungen der Scheitel- und Sohlenbereiche einen Winkel β zueinander bilden. Dabei ist weiter vorgesehen, daß das Einbauelement in Strömungsrichtung des einen der zwei fluiden Medien gesehen aus modular hintereinander geschalteten Elementabschnitten besteht, wobei sich jeweils von einem Elementabschnitt zum nächstfolgenden Elementabschnitt das Strömungsverhältnis zwischen den beiden fluiden Medien von Gegenstrom mit einem Winkel β = 0 in Kreuzgegenstrom mit einem Winkel β ≠ 0 oder von Kreuzgegenstrom mit einem Winkel β ≠ 0 in Gegenstrom mit einem Winkel β = 0 ändert. Dieses Einbauelement findet als sogenanntes Rieselelement in Kühltürmen für Kraftwerke oder Chemieanlagen Verwendung. Sie schaffen große Flächen und lange Strömungswege, die in einer kompakten Raumform unterzubringen sind. Die Höhe der Wellung in den einzelnen Lagen beträgt üblicherweise etwa 20 bis 30 mm, ist also verhältnismäßig groß. Die äußere Form kann beispielsweise die eines Quaders oder eines Zylinders sein. Die fluiden Medien, die derartige Einbauelemente durchströmen, verweilen darin aufgrund der Formgebung eine genügend lange Zeit für einen Wärme- oder Stoffaustausch in einer chemischen oder biologischen Reaktion, wobei es sich bei den Medien zum Beispiel um eine durch Schwerkraft das Element durchströmende Flüssigkeit und ein durch Gebläse durch das Element befördertes Gas handeln kann. Mit diesen bekannten Einbauelementen werden in der Regel Gegenstromkühler aufgebaut, in denen Wasser von oben nach unten und Luft von unten nach oben strömt. Dabei wird das durch die Einbauelemente strömende Wasser mit der im Gegenstrom strömenden Luft gekühlt, wobei verdampftes Wasser mit der Abluft des Kühlturms ohne Nutzung in die Atmosphäre entweicht. Jedes einzelne Einbauelement für einen Kühlturm ist relativ groß mit einer üblichen Höhe von 300 mm oder mehr und einer ebenso großen Breite. Die Länge eines Kühlturmeinbauelements beträgt in der Praxis mehr als 2 m. Zudem werden dann in einem Kühlturm mehrere, meist vier bis sechs, Lagen von Einbauelementen übereinander angeordnet. Ebenso wird in jeder Lage eine Vielzahl von Einbauelementen nebeneinander positioniert. Hierdurch ergibt sich ein insgesamt sehr großer Einbau innerhalb des Kühlturms, der eine erhebliche Größe aufweisen muß, damit überhaupt ein Kühleffekt für das Wasser erreicht wird. Im Gegensatz dazu ist der Kontaktkörper gemäß der vorliegenden Anmeldung dafür vorgesehen, als räumlich kleine und kompakte Einheit im Kreuzstrom von einer Flüssigkeit und einem Gasstrom durchströmt zu werden, wobei die Flüssigkeit unter Schwerkraftwirkung von oben nach unten fließt und der Gasstrom quer dazu in einer im Mittel horizontalen Richtung strömt. Würde ein Kühlturmeinbauelement, das an sich schon für einen Kontaktkörper zu groß ist, als Kontaktkörper eingesetzt, würde die an der Oberseite zugeführte Flüssigkeit schon nach einer relativ kurzen Wegstrecke zur Vorderseite und Rückseite des Kontaktkörpers ausgeleitet, so daß dann die Flüssigkeit nicht mehr für einen Austausch mit dem Gasstrom zur Verfügung stünde. Bei einem Kontaktkörper gemäß der vorliegenden Anmeldung ist dagegen wesentlich, daß die Flüssigkeit auf ihrem gesamten Strömungsweg von oben nach unten durch den Kontaktkörper in dessen Innerem gehalten wird. Aus den vorgenannten Gründen sind deshalb Einbauelemente für Kühltürme nicht für eine Verwendung als Kontaktkörper im Sinne der vorliegenden Anmeldung geeignet.

Für die vorliegende Erfindung stellt sich daher zunächst die Aufgabe, einen Kontaktkörper der eingangs genannten Art zu schaffen, der die vorstehend dargelegten Nachteile vermeidet und bei dem insbesondere eine hohe Stabilität, eine gute Dauerhaltbarkeit, eine wirtschaftliche Herstellung und ein guter Wirkungsgrad bei kompakter Bauweise erreicht werden. Außerdem soll der Kontaktkörper problemlos gereinigt werden können und er soll einen Lichtdurchtritt vermeiden. Weiterhin stellt sich die Aufgabe, einen Verdunstungsbefeuchter oder Stoffaustauscher mit mindestens einem entsprechenden Kontaktkörper zu schaffen.

Die Lösung des ersten Teils dieser Aufgabe gelingt erfindungsgemäß mit einem Kontaktkörper der eingangs genannten Art, der dadurch gekennzeichnet ist,
- daß die Materiallagen jeweils aus einer Folie aus thermoplastischem Kunststoff bestehen,
- daß die Materiallagen miteinander durch Schweiß- und/oder Klebe- und/oder Formschlußverbindungen verbunden sind,
- daß die Wellenachsen an zwei Längskanten jeder Materiallage einen etwa rechtwinklig zu der jeweiligen Längskante verlaufenden Wellenachsabschnitt aufweisen und die Wellenachsen zwischen den Wellenachsabschnitten in mindestens zwei verschiedenen Richtungen mit mindestens einer dazwischen liegenden Richtungsänderung schräg zu den Längskanten verlaufende Bereiche aufweisen, sodaß innerhalb jeder gewellten Materiallage die Wellenachsen mindestens dreimal ihre Richtung ändern,
- daß die Wellenachsen in einem ersten schräg verlaufenden Bereich zu der diesem benachbarten einen Längskante einen Winkel α1 und in einem zweiten schräg verlaufenden Bereich zu der diesem benachbarten anderen Längskante einen Winkel α2 bilden,
- daß die Winkel α1 und α2 zwischen 30° und 60° betragen und
- daß die gewellten Materiallagen jeweils eine Wellungshöhe von weniger als 12 mm aufweisen.

Die erfindungsgemäß vorgesehenen Richtungsänderungen der Wellenachse, die innerhalb jeder Materiallage mindestens dreimal vorliegen, führen vorteilhaft zum einem zu einer mechanischen Stabilisierung sowohl jeder einzelnen Materiallage als auch des daraus gebildeten Kontaktkörpers insgesamt, wodurch dieser auch bei einem großen Volumen noch sehr leicht und zugleich sehr stabil bleibt. Ein zweiter Vorteil des erfindungsgemäßen Kontaktkörpers besteht darin, daß durch die mehrfachen Richtungsänderungen der Wellenachse keine geradlinigen Durchtrittsmöglichkeiten für den Gasstrom und für Lichtstrählen bestehen. Somit wird die Verweildauer des den Kontaktkörper durchströmenden Gasstroms vergrößert, weil dieser im Kontaktkörper aufgrund seiner wenigstens dreimaligen Umlenkung an den Richtungsänderungen der Wellenachsen einen höheren Strömungswiderstand und eine stärkere Verwirbelung erfährt. Die so hervorgerufene turbulente Luftströmung begünstigt die Feuchtigkeitsaufnahme aus der Flüssigkeit in den Gasstrom und/oder den Stoffaustausch zwischen Flüssigkeit und Gas. Zugleich wird eine bei manchen Anwendungen des Kontaktkörpers störende Lichteinstrahlung von außen durch den Kontaktkörper hindurch, z.B. in einen Stall mit künstlichem Tag-Nacht-Rhythmus, sicher ausgeschlossen, weil die Richtungsänderungen der Wellenachsen zu einer vollständigen Abschirmung von Lichtstrahlen, die von außen her auf den Kontaktkörper auftreffen, führen. Um beim Einleiten des Gases in den Kontaktkörper und beim Ausströmen des Gases aus dem Kontaktkörper möglichst günstige Gasströmungsverhältnisse zu gewährleisten, weisen erfindungsgemäß die Wellenachsen an den zwei Längskanten jeder Materiallage den etwa rechtwinklig zu der jeweiligen Längskante verlaufenden Wellenachsabschnitt auf. Damit wird erreicht, daß beim Gaseintritt und -austritt alle Teil-Gasströme parallel zueinander und jeweils senkrecht zur Anströmfläche und Abströmfläche des Kontaktkörpers fließen. Störende Strömungsbehinderungen werden auf diese Weise vermieden. Außerdem bietet jeder so ausgebildete Längskantenbereich die vorteilhafte Möglichkeit einer stabilen Verbindung der aneinander anliegenden Materiallagen miteinander, was für die Stabilität und Belastbarkeit des Kontaktkörpers insgesamt sehr vorteilhaft ist. Die Tatsache, daß die Materiallagen jeweils aus einer Folie aus thermoplastischem Kunststoff bestehen, führt zu einer hohen Stabilität und Dauerhaltbarkeit des Kontaktkörpers, wobei vorteilhaft der Kontaktkörper schadlos sowohl mit Säure betrieben oder bei Bedarf mit Säure behandelt, z.B. entkalkt, werden kann als auch mit einem Hochdruckwasserstrahl, auch mit Heißwasser, mechanisch gereinigt werden kann. Damit lassen sich in der Praxis Einsatzzeiten erzielen, die doppelt oder mehr als doppelt so lang wie bei konventionellen Kontaktkörpern sind. Obwohl die Materiallagen aus Folie nicht porös sind und daher die Flüssigkeit nicht aufsaugen wie Papier, hat der erfindungsgemäße Kontaktkörper aufgrund der mehrfachen Richtungsänderungen der Wellenachsen und der turbulenten Gasströmung eine Verdunstungs- oder Austauschleistung, die mindestens so gut ist wie die Leistung gleich großer konventioneller Kontaktkörper aus den oben erwähnten bekannten Materialien. Durch die Verwendung von Folie aus thermoplastischem Kunststoff kann auch mittels Kleben eine dauerhaft haltbare Verbindung der Materiallagen erreicht werden. Auch wenn alternativ die Materiallagen erfindungsgemäß miteinander durch Schweiß- und/oder Formschlußverbindungen verbunden sind, wird ein dauerhafter Verbund der Materiallagen gewährleistet, der auch durch einen häufigen Wechsel von Feuchtigkeit und Trockenheit nicht negativ beeinflußt wird. Während bei konventionellen Kontaktkörpern aus Papiermaterialien jede Ablagerung, z.B. von Kalk, auf oder in den Materiallagen zu einer Leistungsminderung infolge verminderter Porosität führt, kann bei dem erfindungsgemäßen Kontaktkörper eine leichte Ablagerungsschicht auf den Oberflächen der Materiallagen sogar zu einer Leistungssteigerung führen, weil diese leichte Ablagerungsschicht eine flächige Benetzung der Materiallagen mit der Flüssigkeit fördert.

Eine bevorzugte Weiterbildung sieht vor, daß die Richtungsänderung zwischen den schräg verlaufenden Bereichen der Wellenachsen an einer Längsmittelachse der Materiallage liegt. In dieser Ausführung wird eine einerseits einfache und andererseits vorteilhaft symmetrische und dadurch in allen Richtungen gleich stabile Ausführung sowohl der Materiallagen als auch des daraus gebildeten Kontaktkörpers erreicht.

Weiter ist bevorzugt vorgesehen, daß die Wellenachsen auf der einen Seite der Längsmittelachse parallel zueinander und unter dem Winkel α1 zur Längsmittelachse und auf der anderen Seite der Längsmittelachse parallel zueinander unter dem Winkel α2 zur Längsmittelachse verlaufen. Durch geeignete Wahl der Winkel α1 und α2 können die Eigenschaften des Kontaktkörpers in gezielter Weise beeinflußt werden, z.B. um einen gewünschten Durchströmungswiderstand für den Luftstrom zu erhalten oder um die Verdunstungs- oder Austauschleistung zu optimieren. Damit können die Eigenschaften des erfindungsgemäßen Kontaktkörpers auf relativ einfache Weise so eingestellt werden, daß problemlos ein Ersetzen eines konventionellen Kontaktkörpers durch einen erfindungsgemäßen Kontaktkörper in bestehenden Anlagen zur Luftbefeuchtung, -kühlung und/oder -reinigung möglich ist, ohne daß irgendwelche weitere technische Änderungen an der Anlage nötig werden.

Eine vorteilhaft einfache und symmetrische Formgebung wird dabei vorteilhaft dadurch erreicht, daß die Winkel α1 und α2 einander entgegengerichtet sind und den gleichen Betrag aufweisen.

Bevorzugt ist ein Betrag der Winkel α1 und α2 von jeweils etwa 45°, jeweils gemessen relativ zur Längsmittelachse der Materiallage. Damit beschreibt die Wellenachse jeweils an der Längsmittelachse jeder Materiallage eine Umlenkung von 90°.

Da die etwa rechtwinkelig zu den Längskanten der Materiallagen des Kontaktkörpers verlaufenden Wellenachsabschnitt nur relativ wenig zum Stoffaustausch zwischen Gasstrom und Flüssigkeitsstrom beitragen, sollten diese Wellenachsabschnitte relativ kurz gehalten werden. Bevorzugt ist dazu vorgesehen, daß die etwa rechtwinklig zu den Längskanten verlaufenden Wellenachsabschnitte jeweils eine axiale Länge aufweisen, die zwischen 5 und 15% der gesamten, zwischen ihren Längskanten senkrecht zu diesen gemessenen Länge der Materiallage entspricht.

Im laufenden Einsatz des Kontaktkörpers sind insbesondere dessen Anströmfläche, an der das Gas in den Kontaktkörper eintritt, und, wenn auch geringer, dessen Abströmfläche, aus der der Gasstrom austritt, den größten mechanischen Belastungen unterworfen. Um hier den Kontaktkörper besonders widerstandsfähig zu machen, ist vorgesehen, daß mindestens ein von einer der Längskanten ausgehender Randbereich jeder Materiallage eine vergrößerte Materialstärke aufweist. Die vergrößerte Materialstärke hat hier zudem den Vorteil, daß in diesen Randbereichen das Verschweißen oder Formschlußverbinden der Materiallagen verbessert und erleichtert wird und zu einer besonders stabilen Verbindung führt. Außerdem vermindert die größere Materialstärke das Risiko von Schäden am Kontaktkörper bei dessen Reinigung durch einen Hochdruckwasserstrahl.

Bevorzugt ist dabei der von einer der Längskanten ausgehende Randbereich mit vergrößerter Materialstärke ein gasanströmseitiger Randbereich, was insbesondere dann zweckmäßig ist, wenn im Gasstrom abrasiv wirkende Feststoffpartikel, z.B. Staub oder Sand, mitgeführt werden, die dann im Kontaktkörper aus dem Gasstrom abgeschieden werden.

Die Materiallagen können bei identischer Ausführung relativ zueinander unterschiedlich angeordnet werden, wodurch unterschiedliche Eigenschaften des Kontaktkörpers erreichbar sind. Eine erste diesbezügliche Ausführung sieht vor, daß jeweils zwei einander benachbarte Materiallagen mit in den schräg verlaufenden Bereichen einander kreuzenden Wellenachsen aneinander anliegen. In dieser Anordnung wird der Gasströmungswiderstand im Kontaktkörper relativ niedrig, wobei eine Gasauffeuchtung dann hauptsächlich durch Turbulenzen des Gasstroms bewirkt wird.

Eine dazu alternative Ausführung sieht vor, daß jeweils zwei einander benachbarte Materiallagen mit zueinander parallelen Wellenachsen aneinander anliegen. In dieser Anordnung wird der Gasströmungswiderstand im Kontaktkörper relativ hoch, wobei eine Gasauffeuchtung dann hauptsächlich dadurch bewirkt wird, daß das Gas durch Flüssigkeitsansammlungen in tiefsten Bereichen der Wellung hindurchgedrückt wird. Dies führt zu einer hohen Gasauffeuchtung, wofür allerdings eine stärkere Förderleistung für das Gas benötigt wird; diese Förderleistung kann z.B. ein Ventilator entsprechender Leistung aufbringen.

Zur Erzielung der gewünschten turbulenten Strömung des Gases im Inneren des Kontaktkörpers sollen die Strömungswege für das Gas relativ klein sein. Bevorzugt ist vorgesehen, daß die Wellungshöhe der gewellten Materiallagen zwischen 6 und 10 mm, vorzugsweise etwa 8 mm, beträgt.

Zwecks Erhöhung der mechanischen Stabilität und zur Vergrößerung der benetzbaren Oberfläche des Kontaktkörpers ohne Volumenvergrößerung kann zwischen je zwei gewellten Materiallagen jeweils eine flache zusätzliche Materiallage angeordnet sein, die durchbrechungsfrei oder durchbrochen ausgeführt sein kann.

Bei manchen Anwendungen des Kontaktkörpers dient dieser als Lichtsperre. Dafür ist bevorzugt vorgesehen, daß der die Materiallagen bildende thermoplastische Kunststoff dunkel, vorzugsweise schwarz, eingefärbt ist. Einfallendes Licht wird so weitestgehend absorbiert.

In weiterer Ausgestaltung ist bevorzugt vorgesehen, daß der die Materiallagen bildende thermoplastische Kunststoff mit Aktivruß eingefärbt ist. Dies sorgt für eine schwarze Farbe des Kunststoffs und macht ihn zugleich beständig gegen UV-Strahlung, was wichtig ist, wenn der Kontaktkörper der Sonnenstrahlung ausgesetzt ist. Bekannte Kontaktkörper aus Papiermaterialien verspröden dagegen unter Lichteinfall relativ schnell und werden dadurch sehr beschädigungsanfällig oder sogar unbrauchbar.

Um die Turbulenz der Gasströmung im Kontaktkörper zu fördern, wird weiter vorgeschlagen, daß die Materiallagen zusätzlich zu ihrer Wellung im Verhältnis zu diesen kleinere, turbulenzerzeugende oder turbulenzerhöhende Strukturen aufweisen.

Konkret können die vorgenannten Strukturen beispielsweise durch Prägungen der Materiallagen gebildet sein. Da die Materiallagen aus thermoplastischem Kunststoff bestehen, können die Prägungen z.B. mit einem heißen Werkzeug leicht und dauerhaft haltbar eingebracht werden, zweckmäßig schon bei der Erzeugung der Wellung der Materiallagen.

Um die Materiallagen möglichst schnell und einfach miteinander verbinden zu können, ist bevorzugt vorgesehen, daß die die Materiallagen miteinander verbindenden Schweiß- und/oder Klebe- und/oder Formschlußverbindungen punktuelle Verbindungen in jeweils einander berührenden Flächenbereichen zweier benachbarter Materiallagen sind. Entsprechende Schweißpunkte können z.B. mittels beheizbarer Schweißdorne oder -lanzen erzeugt sein; für eine Klebeverbindung werden zweckmäßig Klebstoffpunkte gesetzt und Formschlußverbindungspunkte können z.B. druckknopfartig ausgeformt und hergestellt sein. Alle genannten Arten der Verbindung sind an den aus thermoplastischem Kunststoff bestehenden Materiallagen sehr dauerhaft haltbar und werden weder durch die Art der Flüssigkeit noch durch Naß-Trocken-Wechsel geschädigt.

Bevorzugt wird vorgeschlagen, daß der Kunststoff Polypropylen (PP) oder Polyethylen (PE) oder Polystyrol (PS) oder Polyvinylchlorid (PVC) ist. Diese Kunststoffe sind für die Verwendung in dem Kontaktkörper aufgrund ihrer Eigenschaften besonders gut geeignet, weil sie kostengünstig, gut benetzbar, haltbar und belastbar ist.

Wie eingangs schon angegeben, betrifft die vorliegende Erfindung neben einem Kontaktkörper auch einen Verdunstungsbefeuchter oder Stoffaustauscher mit mindestens einem Kontaktkörper der vorstehend angegebenen Art. Der erfindungsgemäße Verdunstungsbefeuchter oder Stoffaustauscher ist dadurch gekennzeichnet, daß der Kontaktkörper als wandartiges Element im Verdunstungsbefeuchter oder Stoffaustauscher angeordnet ist, wobei die Materiallagen mit vertikal verlaufenden Längskanten in vertikalen Ebenen liegen und wobei die die Dicke des Kontaktkörpers definierende Länge der Materiallagen zwischen deren Längskanten kleiner ist als eine Höhe und Breite des Kontaktkörpers. Im Verhältnis zur Höhe und Breite ist also die Dicke des Kontaktkörpers bei dem erfindungsgemäßen Verdunstungsbefeuchter oder Stoffaustauscher relativ klein, wobei aufgrund der erfindungsgemäßen Gestaltung des Kontaktkörpers dennoch ein ausreichender Kontakt und Austausch zwischen der Flüssigkeit und dem Gasstrom gewährleistet ist, auch wenn der Gasstrom in Richtung der kleinsten Dimension des Kontaktkörpers diesen durchströmt. Damit können Verdunstungsbefeuchter oder Stoffaustauscher geschaffen werden, die in Wänden von Gebäuden angeordnet werden können und die dabei selbst nicht oder nicht wesentlich dicker sind als die Gebäudewand, in der sie angeordnet sind. Damit ist ein sehr platzsparender Einbau von Verdunstungsbefeuchtern oder Stoffaustauschern in Gebäuden möglich. Auch besteht so die vorteilhafte Möglichkeit, bei bereits vorhandenen Gebäuden mit Fensteröffnungen ein oder mehrere Fenster durch passend hergestellte Verdunstungsbefeuchter oder Stoffaustauscher gemäß Erfindung zu ersetzen, beispielsweise zur Kühlung des Innenraums des Gebäudes.

Bevorzugt ist für den Verdunstungsbefeuchter oder Stoffaustauscher gemäß Erfindung weiter vorgesehen, daß das durch den Kontaktkörper hindurchleitbare Gas Luft oder mit gasförmigen und/oder flüssigen und/oder festen Schad- oder Schmutzstoffen befrachtete Luft ist. Hierbei dient der Verdunstungsbefeuchter oder Stoffaustauscher entweder zur Befeuchtung und Kühlung von Luft oder zur Reinigung von Luft, wobei entweder Luft aus der äußeren Umgebung vor dem Einleiten in ein Gebäude gereinigt werden kann oder Abluft aus einem Gebäude oder einer Schadstoffe abgebenden Vorrichtung vor einem Abführen in die Atmosphäre gereinigt werden kann.

Weiter ist für den erfindungsgemäßen Verdunstungsbefeuchter oder Stoffaustauscher bevorzugt vorgesehen, daß die durch den Kontaktkörper hindurchleitbare Flüssigkeit Wasser oder eine Säure oder eine Lauge ist. Bei Verwendung von Wasser wird insbesondere eine Befeuchtung und Kühlung des durch den Kontaktkörper hindurch geleiteten Gaststroms bewirkt. Bei Verwendung einer Säure oder einer Lauge dient die Flüssigkeit insbesondere dazu, mit dem durch den Kontaktkörper hindurchtretenden Gasstrom eine chemische Reaktion einzugehen. Diese Reaktion kann beispielsweise bei einer Stallentlüftung darin bestehen, mit Hilfe von Schwefelsäure als Flüssigkeit Ammoniak aus durch den Kontaktkörper geleiteter Luft mittels chemischer Absorption abzuscheiden. Dabei wird das Ammoniak mit der Schwefelsäure zu Ammoniumsulfat umgesetzt, das mit der Säure abgeleitet wird. Da der Kontaktkörper des erfindungsgemäßen Verdunstungsbefeuchters oder Stoffaustauschers aus thermoplastischer Folie besteht, können auch aggressive Flüssigkeiten, wie Säuren oder Laugen, ohne Schaden für den Kontaktkörper eingesetzt werden. Bei Kontaktkörpern aus Papiermaterialien würden derart aggressive Flüssigkeiten zu einer schnellen Beschädigung oder Zerstörung führen.

Weiter schlägt die Erfindung für den Verdunstungsbefeuchter oder Stoffaustauscher vor, daß der mindestens eine Kontaktkörper lösbar und austauschbar in einem Halterahmen des Verdunstungsbefeuchters oder Stoffaustauschers gehalten ist. Damit ist im Bedarfsfall eine schnelle Wartung des Verdunstungsbefeuchters oder Stoffaustauschers möglich. Gleichzeitig besteht die Möglichkeit, den oder die Kontaktkörper des Verdunstungsbefeuchters oder Stoffaustauschers wahlweise im eingebauten Zustand oder alternativ in einem ausgebauten Zustand zu reinigen und dann erneut zu verwenden, weil die einzelnen Kontaktkörper aufgrund ihrer hohen mechanischen und chemischen Beständigkeit sowohl mit einem Hochdruckwasserstrahl, auch mit heißem Wasser, als auch chemisch, zum Beispiel mit einem Entkalkungsmittel, reinigend behandelt werden können, ohne daß dabei Schäden entstehen.

Schließlich ist für den erfindungsgemäßen Verdunstungsbefeuchter oder Stoffaustauscher noch vorgesehen, daß ihm mindestens eine Umwälzpumpe für die durch den Kontaktkörper hindurchzuleitende Flüssigkeit und/oder mindestens ein Ventilator für das durch den Kontaktkörper hindurchzuleitende Gas zugeordnet sind/ist. Damit wird der Verdunstungsbefeuchter oder Stoffaustauscher unabhängig von externen Komponenten, was einen problemlosen Betrieb des Verdunstungsbefeuchters oder Stoffaustauschers gewährleistet.

Zwei Ausführungsbeispiele der Erfindung werden im folgenden anhand einer Zeichnung erläutert. Die Figuren der Zeichnung zeigen:
- Figur 1: einen Ausschnitt aus einem Kontaktkörper in einer schematischen Seitenansicht,
- Figur 2: einen Luftbefeuchter oder Stoffaustauscher mit einem Kontaktkörper und
- Figur 3: einen Ausschnitt aus einer einzelnen Materiallage des Kontaktkörpers in Schnitt.

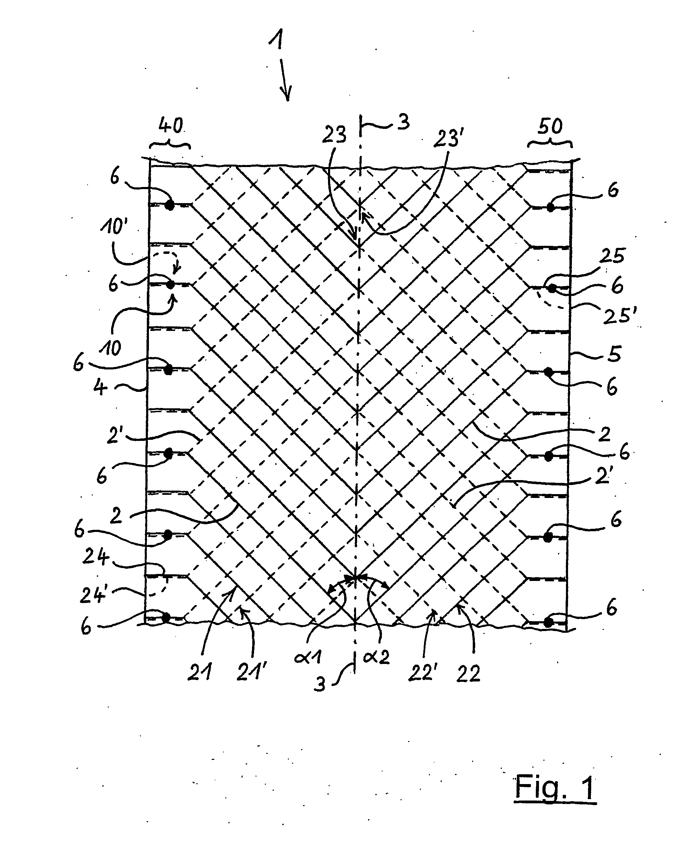

Gemäß Figur 1 besteht der Kontaktkörper 1 aus einer Vielzahl von Materiallagen 10 und 10', die hier jeweils parallel zur Zeichnungsebene ausgerichtet sind und hintereinander sowie aneinander anliegend angeordnet und in geeigneter Art und Weise miteinander zu dem Kontaktkörper 1 verbunden sind. Im Einsatz stehen die Materiallagen 10, 10' innerhalb des Kontaktkörpers 1 üblicherweise in vertikalen Ebenen.

Alle Materiallagen 10, 10' weisen eine Wellenstruktur mit Wellenachsen 2 bzw. 2' auf, die jeweils dem Verlauf eines Wellentals oder eines Wellenberges der Wellenstruktur entsprechen.

Die in der Zeichnungsfigur dem Betrachter zugewandte Materiallage 10 besitzt eine Wellung mit in durchgezogenen Linien dargestellten Wellenachsen 2. Die Wellung kann dabei im Querschnitt gesehen z.B. sinusförmig, trapezförmig oder rechtwinklig sein. Von der in der Figur 1 linken Längskante 4 ausgehend verläuft die Wellenachse 2 zunächst horizontal nach rechts, wodurch ein Wellenachsabschnitt 24 gebildet wird, der einen Randbereich 40 des Kontaktkörpers 1 definiert. Weiter nach rechts verlaufen die Wellenachsen 2 in einem Bereich 21 schräg abwärts bis zu einer Längsmittelachse 3 der Materiallage 10. Dort machen die Wellenachsen 2 eine Richtungsänderung 23 von etwa 90° und laufen dann weiter nach rechts in einem Bereich 22 wieder aufwärts. In einem an der rechten Längskante 5 liegenden Randbereich 50 verlaufen die Wellenachsen 2 wieder waagerecht.

Relativ zur linken Längskante 4 und zur dazu parallelen Längsmittelachse 3 bilden die Wellenachsen 2 links von der Längsmittelachse 3 den Winkel α1 und, dazu spiegelsymmetrisch, rechts von der Längsmittelachse 3 den Winkel α2. Hier betragen die Winkel α1 und α2 jeweils 45°, wodurch sich der Winkel von 90° für die Richtungsänderung 23 im Verlauf der Wellenachsen 2 an der Längsmittelachse 3 ergibt.

In der zweiten Materiallage 10', die hier unmittelbar hinter der dem Betrachter zugewandten ersten Materiallage 10 liegt, verlaufen die gestrichelt gezeichneten Wellenachsen 2' in den Randbereichen 40 und 50 parallel zu den Wellenachsen 2 der ersten Materiallage 10, so daß in der zweiten Materiallage 10' Wellenachsabschnitte 24' und 25' gebildet werden, die in den Randbereichen 40 und 50 liegen und parallel mit den Wellenachsabschnitten 24 und 25 der erste Materiallage 10 in diesen Randbereichen 40 und 50 des Kontaktkörpers 1 sind. Hier liegt jeweils die erste Materiallage 10 mit einem der zweiten Materiallage 10' zugewandten Wellentalbereich an einem der ersten Materiallage 10 zugewandten Wellenbergbereich der zweiten Materiallage 10' an. In diesen Anlagebereichen ist jeweils ein Verbindungspunkt 6 in Form einer Schweiß- oder Klebe- oder Formschlußverbindung angebracht.

Im weiteren Verlauf haben die Wellenachsen 2' einen zu den Wellenachsen 2 symmetrisch entgegengesetzten Verlauf. Dies kann einfach dadurch erreicht werden, daß jeweils die zweite, mit der ersten Materiallage 10 formgleiche zweite Materiallage 10' relativ zur ersten Materiallage 10 auf den Kopf gestellt ist. Hiermit wird erreicht, daß sich die Wellenachsen 2 und 2' gegenseitig kreuzen, im dargestellten Ausführungsbeispiel unter einem Winkel von 90°. Bei Betrachtung des Verlaufs der Wellenachsen 2' von links nach rechts ergibt sich also zunächst der horizontale Wellenachsabschnitt 24', der von der linken Längskante 4 der Materiallage 10' ausgeht. Rechts vom Randbereich 40 verlaufen die Wellenachsen 2' in einem Bereich 21' schräg nach oben bis zur Längsmittelachse 3. Von einer dort liegenden Richtungsänderung 23' fallen die Wellenachsen 2' in einem Bereich 22' schräg nach rechts unten ab bis zum rechten Randbereich 50. Innerhalb des Randbereichs 50 verlaufen dann die Wellenachsen 2' als Wellenachsabschnitte 25' wieder waagerecht.

Mit der am gezeichneten Beispiel erläuterten Wellung der Materiallagen 10 und 10' wird durch Aneinanderfügen einer Vielzahl von abwechselnden Materiallagen 10 und 10' ein Raumgitter gebildet, das beispielsweise horizontal von links nach rechts von einem Gasstrom, z.B. Luftstrom, durchströmbar und vertikal von oben nach unten von einem Flüssigkeitsstrom, z.B. Wasserstrom, durchrieselbar ist. Dabei nimmt das Gas aus dem Flüssigkeitsstrom Feuchtigkeit auf, wodurch der Gasstrom befeuchtet und gekühlt wird. Außerdem kann dabei das Gas gereinigt, z.B. entstaubt, werden.

Das Material für die Materiallagen 10, 10' ist ein thermoplastischer Kunststoff, z.B. Polypropylen (PP) oder Polyethylen (PE) oder Polystyrol (PS) oder Polyvinylchlorid (PVC). Die Herstellung der Folie kann vorzugsweise und vorteilhaft in einem Extrusions- und Durchlaufprozeß unter Einwirkung von Wärme und Formgebungswerkzeugen erfolgen, was eine sehr rationelle Fertigung gestattet. Nach dem Abkühlen ist die Folie in ihrer Form fixiert und weist auch bei geringer Materialstärke eine gute Stabilität auf, insbesondere nach einem Verbinden der einzelnen Materiallagen 10, 10' zu dem Kontaktkörper 1. Die Materiallagen 10, 10' lassen sich als zunächst größere Folienbahn herstellen und thermisch formen und nach Abkühlung und Erstarrung ihrer Form auf die gewünschten und benötigten Längen und Breiten zuschneiden. Außerdem besteht bei der beschriebenen Art der Herstellung die Möglichkeit, die Materialstärke der Materiallagen 10, 10' über deren Breite gesehen zu variieren, insbesondere in den beiden Randbereichen 40 und 50 eine größere Materialstärke vorzusehen. In diesen Randbereichen 40 und 50 werden die einzelnen Materiallagen 10, 10' beispielsweise durch die thermische Verschweißung auf einfache und haltbare Art und Weise miteinander verbunden, um den Kontaktkörper 1 zu bilden.

Abweichend vom gezeichneten Beispiel können die Winkel α1 und α2 selbstverständlich auch andere und/oder unterschiedliche Werte annehmen. Auch können die Wellenachsen 2 und 2' eine größere Zahl von Richtungsänderungen 23, 23' als die im Beispiel dargestellten drei Richtungsänderungen aufweisen.

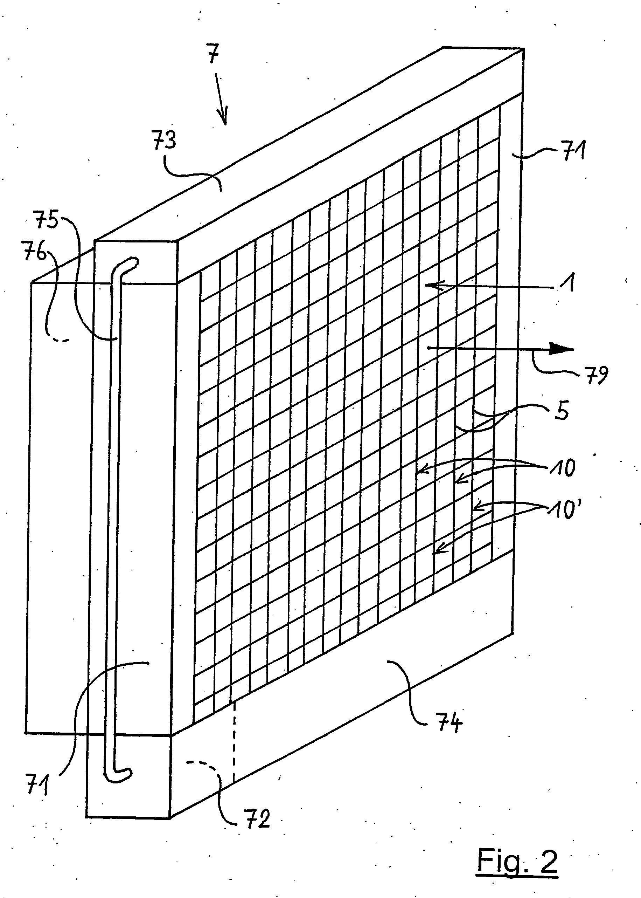

Figur 2 der Zeichnung zeigt ein Beispiel für einen Verdunstungsbefeuchter oder Stoffaustauscher 7 in einer schematischen perspektivischen Darstellung, wobei der Verdunstungsbefeuchter oder Stoffaustauscher 7 mit einem oder mehreren Kontaktkörpern 1 ausgestattet ist. Die Anordnung aus einem oder mehreren Kontaktkörpern 1 ist in einem seitlich beiderseits angeordneten Halterahmen 71 lösbar gehaltert, so daß bei Bedarf ein einfaches Entnehmen und Einbauen der Kontaktkörper 1 möglich ist. Oberseitig liegt über der Anordnung der Kontaktkörper 1 ein Flüssigkeitsverteiler 71, aus dem Flüssigkeit von oben her in die Anordnung der Kontaktkörper 1, über deren Oberseite möglichst gleichmäßig verteilt, eingeleitet wird. Die Flüssigkeit, zum Beispiel Wasser oder eine Säure, rieselt durch die eine räumliche Struktur bildende Anordnung der Kontaktkörper 1 unter Schwerkraftwirkung von oben nach unten und gelangt auf diesem Wege schließlich in einen unterhalb der Anordnung der Kontaktkörper 1 angeordneten Flüssigkeitssammler 74, der wannenartig ausgeführt ist. Im Inneren dieses Flüssigkeitssammlers 74 ist bei dem dargestellten Ausführungsbeispiel eine Umwälzpumpe 72 angeordnet, die über eine Flüssigkeitsleitung 75 die Flüssigkeit aus dem Flüssigkeitssammler 74 in den Flüssigkeitsverteiler 73 fördert, von wo aus die Flüssigkeit wieder durch die Anordnung der Kompaktkörper 1 nach unten strömt oder rieselt. Verbrauchte Flüssigkeit wird bedarfsgerecht manuell oder automatisch nachgefüllt.

Im Kreuzstrom zu der Flüssigkeit wird ein Gasstrom in Richtung des Strömungspfeils 79 in einer im wesentlichen horizontalen Richtung durch die Anordnung der Kontaktkörper 1 geleitet. Hierzu dient ein auf der in Figur 2 vom Betrachter abgewandten Rückseite des Verdunstungsbefeuchters oder Stoffaustauschers 7 angeordneter Ventilator 76, der umfangsseitig von einer umlaufenden Schutzwand umgeben ist.

Innerhalb der Anordnung der Kontaktkörper 1 sind abwechselnd die in Figur 1 schon beschriebenen Materiallagen 10 und 10' in vertikaler Richtung angeordnet, wobei die Längskanten 5 der Materiallagen 10, 10' dem Betrachter zugewandt sind.

Im Inneren der Anordnung der Kontaktkörper 1 treten der Flüssigkeitsstrom und der im Kreuzstrom dazu verlaufende Gasstrom mit der Strömungsrichtung 79 im Austausch miteinander, wobei ein Teil der Flüssigkeit verdunstet wird und so der Gasstrom befeuchtet sowie gekühlt wird. Gleichzeitig kann der Gasstrom im Verdunstungsbefeuchter oder Stoffaustauscher 7 gereinigt werden, indem beispielsweise feste oder flüssige Partikel aus dem zuströmenden Gasstrom ausgewaschen werden oder indem zwischen Gas und Flüssigkeit eine chemische Reaktion abläuft.

Wie die Figur 2 anschaulich zeigt, hat die Anordnung der Kontaktkörper 1 in Horizontalrichtung, das heißt in Richtung parallel zur Gasströmungsrichtung 79 betrachtet, eine relativ geringe Dicke oder Tiefe, so daß ein problemloser Einbau des Verdunstungsbefeuchters oder Stoffaustauschers 7 in Wände von Gebäuden oder in Gehäuse von Maschinen oder Anlagen möglich ist. Aufgrund der in Figur 1 erläuterten Führung der Wellenachsen mit mehrfacher Richtungsänderung ergeben sich auch bei einer nur geringen Dicke der Kontaktkörper 1 schon ein intensiver Austausch und eine intensive Wechselwirkung zwischen Flüssigkeitsstrom und Gasstrom, so daß ein hoher Wirkungsgrad bei kompakter Bauweise gewährleistet ist.

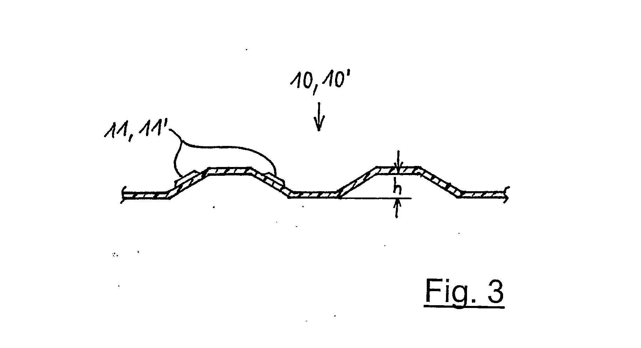

Die Figur 3 der Zeichnung zeigt einen Ausschnitt aus einer einzelnen Materiallage 10 oder 10' des Kontaktkörpers 1 im Schnitt. Die Wellung ist hier trapezförmig mit einer Höhe h ausgebildet. Zusätzlich zur Wellung hat die Materiallage 10 oder 10' hier noch kleinere Strukturen 11, 11' in Form von erhabenen Prägungen, die zur Erzeugung von gewünschten Turbulenzen in dem die Materiallagen 10, 10' überstreichenden Gasstrom beitragen.

## Patentansprüche

1. Kontaktkörper (1) für einen Verdunstungsbefeuchter oder Stoffaustauscher für die Befeuchtung, Kühlung und/oder Reinigung von Gasen, wobei der Kontaktkörper (1) aus einer Vielzahl von gewellten Materiallagen (10, 10') besteht, die aneinander anliegen und so eine Raumgitterstruktur bilden, wobei durch den Kontaktkörper (1) einerseits von oben her eine Flüssigkeit hindurchleitbar und andererseits im Kreuzstrom zur Flüssigkeit ein Gasstrom unter dessen Befeuchtung, Kühlung und/oder Reinigung hindurchleitbar ist,
**dadurch gekennzeichnet,**
- **daß** die Materiallagen (10, 10') jeweils aus einer Folie aus thermoplastischem Kunststoff bestehen,
- **daß** die Materiallagen (10, 10') miteinander durch Schweiß- und/oder Klebe- und/oder Formschlußverbindungen (6) verbunden sind,
- **daß** die Wellenachsen (2, 2') an zwei Längskanten (4 und 5) jeder Materiallage (10, 10') einen etwa rechtwinklig zu der jeweiligen Längskante (4; 5) verlaufenden Wellenachsabschnitt (24, 25; 24', 25') aufweisen und die Wellenachsen (2, 2') zwischen den Wellenachsabschnitten (24, 25; 24', 25') in mindestens zwei verschiedenen Richtungen mit mindestens einer dazwischen liegenden Richtungsänderung (23) schräg zu den Längskanten (4, 5) verlaufende Bereiche (21, 21'; 22, 22') aufweisen, sodaß innerhalb jeder gewellten Materiallage (10, 10') die Wellenachsen (2, 2') mindestens dreimal ihre Richtung ändern,
- **daß** die Wellenachsen (2, 2') in einem ersten schräg verlaufenden Bereich (21, 21') zu der diesem benachbarten einen Längskante (4) einen ersten Winkel (α1) und in einem zweiten schräg verlaufenden Bereich (22, 22') zu der diesem benachbarten anderen Längskante (5) einen zweiten Winkel (α2) bilden,
- **daß** die ersten und zweiten Winkel (α1 und α2) zwischen 30° und 60° betragen und
- **daß** die gewellten Materiallagen (10, 10') jeweils eine Wellungshöhe von maximal 12 mm aufweisen.

2. Kontaktkörper nach Anspruch 1, **dadurch gekennzeichnet, daß** die Richtungsänderung (23) zwischen den schräg verlaufenden Bereichen (21 und 22; 21' und 22') der Wellenachsen (2, 2') an einer Längsmittelachse (3) der Materiallage (10, 10') liegt.

3. Kontaktkörper nach Anspruch 2, **dadurch gekennzeichnet, daß** die Wellenachsen (2, 2') auf der einen Seite der Längsmittelachse (3) parallel zueinander und unter dem ersten Winkel (α1) zur Längsmittelachse (3) und auf der anderen Seite der Längsmittelachse (3) parallel zueinander unter dem zweiten Winkel (α2) zur Längsmittelachse (3) verlaufen.

4. Kontaktkörper nach Anspruch 3, **dadurch gekennzeichnet, daß** die ersten und zweiten Winkel (α1 und α2) einander entgegengerichtet sind und den gleichen Betrag aufweisen.

5. Kontaktkörper nach einem der vorhergehenden Ansprüche, **dadurch gekennzeichnet, daß** die ersten und zweiten Winkel (α1 und α2) jeweils etwa 45° betragen.

6. Kontaktkörper nach einem der vorhergehenden Ansprüche, **dadurch gekennzeichnet, daß** die etwa rechtwinklig zu den Längskanten (4, 5) verlaufenden Wellenachsabschnitte (24, 25; 24', 25') jeweils eine axiale Länge aufweisen, die zwischen 5 und 15% der gesamten, zwischen ihren Längskanten (4 und 5) senkrecht zu diesen gemessenen Länge der Materiallage (10, 10') entspricht.

7. Kontaktkörper nach einem der vorhergehenden Ansprüche, **dadurch gekennzeichnet, daß** mindestens ein von einer der Längskanten (4, 5) ausgehender Randbereich (40, 50) jeder Materiallage (10, 10') eine vergrößerte Materialstärke aufweist.

8. Kontaktkörper nach Anspruch 7, **dadurch gekennzeichnet, daß** der von einer der Längskanten (4, 5) ausgehende Randbereich (40, 50) mit vergrößerter Materialstärke ein gasanströmseitiger Randbereich (40) ist.

9. Kontaktkörper nach einem der Ansprüche 1 bis 8, **dadurch gekennzeichnet, daß** jeweils zwei einander benachbarte Materiallagen (10, 10') mit in den schräg verlaufenden Bereichen (21, 21'; 22, 22') einander kreuzenden Wellenachsen (2, 2') aneinander anliegen.

10. Kontaktkörper nach einem der Ansprüche 1 bis 8, **dadurch gekennzeichnet, daß** jeweils zwei einander benachbarte Materiallagen (10, 10') mit zueinander parallelen Wellenachsen (2, 2') aneinander anliegen.

11. Kontaktkörper nach einem der vorhergehenden Ansprüche, **dadurch gekennzeichnet, daß** die Wellungshöhe der gewellten Materiallagen (10, 10') zwischen 6 und 10 mm, vorzugsweise etwa 8 mm, beträgt.

12. Kontaktkörper nach einem der vorhergehenden Ansprüche, **dadurch gekennzeichnet, daß** zwischen je zwei gewellten Materiallagen (10, 10') jeweils eine flache zusätzliche Materiallage angeordnet ist, die durchbrechungsfrei oder durchbrochen ausgeführt ist.

13. Kontaktkörper nach einem der vorhergehenden Ansprüche, **dadurch gekennzeichnet, daß** der die Materiallagen (10, 10') bildende thermoplastische Kunststoff dunkel, vorzugsweise schwarz, eingefärbt ist.

14. Kontaktkörper nach Anspruch 13, **dadurch gekennzeichnet, daß** der die Materiallagen (10, 10') bildende thermoplastische Kunststoff mit Aktivruß eingefärbt ist.

15. Kontaktkörper nach einem der vorhergehenden Ansprüche, **dadurch gekennzeichnet, daß** die Materiallagen (10, 10') zusätzlich zu ihrer Wellung im Verhältnis zu diesen kleinere, turbulenzerzeugende oder turbulenzerhöhende Strukturen (11, 11') aufweisen.

16. Kontaktkörper nach Anspruch 15, **dadurch gekennzeichnet, daß** die Strukturen (11, 11') durch Prägungen der Materiallagen (10, 10') gebildet sind.

17. Kontaktkörper nach einem der vorhergehenden Ansprüche, **dadurch gekennzeichnet, daß** die die Materiallagen (10, 10') miteinander verbindenden Schweiß- und/oder Klebe- und/oder Formschlußverbindungen (6) punktuelle Verbindungen in jeweils einander berührenden Flächenbereichen zweier benachbarter Materiallagen (10, 10') sind.

18. Kontaktkörper nach einem der vorhergehenden Ansprüche, **dadurch gekennzeichnet, daß** der Kunststoff Polypropylen (PP) oder Polyethylen (PE) oder Polystyrol (PS) oder Polyvinylchlorid (PVC) ist.

19. Verdunstungsbefeuchter oder Stoffaustauscher (7) mit mindestens einem Kontaktkörper (1) nach einem der vorhergehenden Ansprüche, **dadurch gekennzeichnet, daß** der Kontaktkörper (1) als wandartiges Element im Verdunstungsbefeuchter oder Stoffaustauscher (7) angeordnet ist, wobei die Materiallagen (10, 10') mit vertikal verlaufenden Längskanten (4, 5) in vertikalen Ebenen liegen und wobei die die Dicke des Kontaktkörpers (1) definierende Länge der Materiallagen (10, 10') zwischen deren Längskanten (4, 5) kleiner ist als eine Höhe und Breite des Kontaktkörpers (1).

20. Verdunstungsbefeuchter oder Stoffaustauscher nach Anspruch 19, **dadurch gekennzeichnet, daß** das durch den Kontaktkörper (1) hindurchleitbare Gas Luft oder mit gasförmigen und/oder flüssigen und/oder festen Schad- oder Schmutzstoffen befrachtete Luft ist.

21. Verdunstungsbefeuchter oder Stoffaustauscher nach Anspruch 19 oder 20, **dadurch gekennzeichnet, daß** die durch den Kontaktkörper (1) hindurchleitbare Flüssigkeit Wasser oder eine Säure oder eine Lauge ist.

22. Verdunstungsbefeuchter oder Stoffaustauscher nach einem der Ansprüche 19 bis 21, **dadurch gekennzeichnet, daß** der mindestens eine Kontaktkörper (1) lösbar und austauschbar in einem Halterahmen (71) des Verdunstungsbefeuchters oder Stoffaustauschers (7) gehalten ist.

23. Verdunstungsbefeuchter oder Stoffaustauscher nach einem der Ansprüche 19 bis 22, **dadurch gekennzeichnet, daß** ihm mindestens eine Umwälzpumpe (72) für die durch den Kontaktkörper (1) hindurchzuleitende Flüssigkeit und/oder mindestens ein Ventilator (76) für das durch den Kontaktkörper (1) hindurchzuleitende Gas zugeordnet sind/ist.

## Claims

1. Contact body (1) for an evaporation humidifier or material exchanger for humidifying, cooling and/or cleaning of gases, the contact body (1) comprising a plurality of corrugated material layers (10, 10') which adjoin each other and thus form a space lattice structure, wherein, on the one hand, a liquid can be passed from the top through the contact body (1)and, on the other hand, a gas flow can be passed through in cross flow to the liquid for humidification, cooling and/or cleaning of the gas flow,
**characterized in that**
- the material layers (10, 10') each consist of a film of thermoplastic plastic;
- the material layers (10, 10') are interconnected by welding and/or bonding and/or positive fit (6);
- the corrugation axes (2, 2') at two longitudinal edges (4 and 5) of each material layer (10, 10') comprise a corrugation axis section (24, 25; 24', 25') that runs approximately in an orthogonal direction in relation to the respective longitudinal edge (4; 5), and the corrugation axes (2, 2') between the corrugation axis sections (24, 25; 24', 25') have regions (21, 21'; 22, 22') extending obliquely to the longitudinal edges (4, 5) and running in at least two different directions with at least one change of direction (23) in between, in such a way that in each material layer (10, 10') the corrugation axes (2, 2') change direction at least three times;
- the corrugation axes (2, 2') in a first oblique region (21, 21') lie at a first angle (α1) to one longitudinal edge (4) neighboring it, and in a second oblique region (22, 22'), they lie at a second angle (α2) to the other longitudinal edge (5) neighboring it;
- the first and second angles (α1 and α2) are between 30° and 60°; and
- the corrugated material layers (10, 10') each have a corrugation height of 12 mm maximum.

2. Contact body according to claim 1, **characterized in that** the directional change (23) lies between the oblique regions (21 and 22; 21' and 22') of the corrugation axes (2, 2') on a longitudinal center axis (3) of the material layer (10, 10').

3. Contact body according to claim 2, **characterized in that** the corrugation axes (2, 2') on the one side of the longitudinal center axis (3) extend parallel to each other and at the first angle (α1) to the longitudinal center axis (3), and on the other side of the longitudinal center axis (3), parallel to each other at the second angle (α2) to the longitudinal center axis (3).

4. Contact body according to claim 3, **characterized in that** the first and second angles (α1 and α2) are opposite to each other and have the same size.

5. Contact body according to any one of the preceding claims, **characterized in that** the first and second angles (α1 and α2) are each approximately 45°.

6. Contact body according to any one of the preceding claims, **characterized in that** the corrugation axis sections (24, 25; 24', 25') running approximately in an orthogonal direction in relation to the longitudinal edges (4, 5) each have an axial length which is equivalent to between 5 and 15% of the total length of the material layer (10, 10') measured between their longitudinal edges (4 and 5) perpendicularly to them.

7. Contact body according to any one of the preceding claims, **characterized in that** at least one marginal area (40, 50) extending from one of the longitudinal edges (4, 5) of each material layer (10, 10') has an increased material thickness.

8. Contact body according to claim 7, **characterized in that** the marginal area (40, 50) with increased material thickness extending from one of the longitudinal edges (4, 5) is a marginal area on the gas upflow side (40).

9. Contact body according to any one of the claims 1 to 8, **characterized in that** two respectively neighboring material layers (10, 10') adjoin each other with corrugation axes (2, 2') crossing each other in the oblique regions (21, 21'; 22, 22').

10. Contact body according to any one of the claims 1 to 8, **characterized in that** two neighboring material layers (10, 10') each adjoin each other with corrugation axes (2, 2') which are parallel to each other.

11. Contact body according to any one of the preceding claims, **characterized in that** the corrugation height of the corrugated material layers (10, 10') is between 6 and 10 mm, preferably about 8 mm.

12. Contact body according to any one of the preceding claims, **characterized in that**, between two corrugated material layers (10, 10') each, a flat additional material layer is provided which is designed without perforations or with perforations.

13. Contact body according to any one of the preceding claims, **characterized in that** the thermoplastic plastic forming the material layers (10, 10') is stained dark, preferably black.

14. Contact body according to claim 13, **characterized in that** the thermoplastic plastic forming the material layers (10, 10') is stained with activated carbon.

15. Contact body according to any one of the preceding claims, **characterized in that** the material layers (10, 10'), in addition to their corrugation, comprise turbulence-generating or turbulence-increasing structures (11, 11') which are smaller in relation to the corrugations.

16. Contact body according to claim 15, **characterized in that** the structures (11, 11') are formed by embossments of the material layers (10, 10').

17. Contact body according to any one of the preceding claims, **characterized in that** the welding and/or bonding and/or positive fit interconnections (6) of the material layers (10, 10') are selective connections in respectively touching surface areas of two neighboring material layers (10, 10').

18. Contact body according to any one of the preceding claims, **characterized in that** the plastic is polypropylene (PP) or polyethylene (PE) or polystyrene (PS) or polyvinylchloride (PVC).

19. Evaporation humidifier or material exchanger (7) with at least one contact body (1) according to any one of the preceding claims, **characterized in that** the contact body (1) is arranged as a wall-type element in the evaporation humidifier or material exchanger (7), with the material layers (10, 10') with vertically extending longitudinal edges (4, 5) lying in vertical planes and wherein the length of the material layers (10, 10') between their longitudinal edges (4, 5) which defines the thickness of the contact body (1) is smaller than the height and width of the contact body (1).

20. Evaporation humidifier or material exchanger according to claim 19, **characterized in that** the gas which can be passed through the contact body (1) is air or air laden with gaseous and/or liquid and/or solid pollutants or contaminants.

21. Evaporation humidifier or material exchanger according to claim 19 or 20, **characterized in that** the liquid which can be passed through the contact body (1) is water or an acid or a lye.

22. Evaporation humidifier or material exchanger according to any one of the claims 19 to 21, **characterized in that** the at least one contact body (1) is detachably and replaceably held in a holding frame (71) of the evaporation humidifier or material exchanger (7).

23. Evaporation humidifier or material exchanger according to any one of the claims 19 to 22, **characterized in that** at least one circulating pump (72) is allocated to it, for the liquid to be passed through the contact body (1), and/or at least one fan (76) for the gas to be passed through the contact body (1).

## Revendications

1. Corps de contact (1) pour un humidificateur à évaporation ou un échangeur de substances pour l'humidification, le refroidissement et/ou le nettoyage de gaz, ledit corps de contact (1) étant composé de plusieurs couches de matériau ondulées (10, 10') qui sont accolées les unes aux autres et forment ainsi une structure réticulaire spatiale, sachant que, d'un côté, un liquide peut être conduit par le haut à travers le corps de contact (1), et que, d'un autre côté, un flux de gaz peut être conduit à courant croisé par rapport au liquide pour être humidifié, refroidi et/ou nettoyé,
**caractérisé en ce**
- **que** les couches de matériau (10, 10') sont composées respectivement d'un film de matière thermoplastique,
- **que** les couches de matériau (10, 10') sont reliées entre elles par des liaisons de soudage et/ou de collage et/ou de forme (6),
- **que** les axes d'ondulation (2, 2') présentent, sur deux bords longitudinaux (4 et 5) de chaque couche de matériau (10, 10'), un segment d'axe d'ondulation (24, 25; 24', 25') approximativement perpendiculaire au bord longitudinal respectif (4; 5), et que les axes d'ondulation (2, 2') présentent entre lesdits segments d'axe d'ondulation (24, 25; 24', 25') des sections (21, 21'; 22, 22') s'étendant de manière inclinée par rapport aux bords longitudinaux (4, 5) dans au moins deux directions différentes avec au moins un changement de direction (23) entre ces deux segments, si bien que les axes d'ondulation (2, 2') changent au moins trois fois de direction dans chaque couche de matériau ondulée (10, 10'),
- **que** les axes d'ondulation (2, 2') forment, dans une première section inclinée (21, 21'), un premier angle (α1) par rapport à un bord longitudinal (4) voisin de cette section, et, dans une seconde section inclinée (22, 22'), un second angle (α2) par rapport à l'autre bord longitudinal (5) voisin de cette section,
- **que** les premier et second angles (α1et α2) sont compris entre 30° et 60°, et
- **que** les couches de matériau ondulées (10, 10') présentent respectivement une hauteur d'ondulation de 12 mm maximum.

2. Corps de contact selon la revendication 1, **caractérisé en ce que** le changement de direction (23) a lieu entre les sections inclinées (21 et 22; 21' et 22') des axes d'ondulation (2, 2') sur un axe médian longitudinal (3) de la couche de matériau (10, 10').

3. Corps de contact selon la revendication 2, **caractérisé en ce que** les axes d'ondulation (2, 2') s'étendent d'un côté de l'axe médian longitudinal (3), parallèlement les uns aux autres et sous le premier angle (α1) par rapport à l'axe médian longitudinal (3), et de l'autre côté de l'axe médian longitudinal (3), parallèlement les uns aux autres, sous le second angle (α2) par rapport à l'axe médian longitudinal (3).

4. Corps de contact selon la revendication 3, **caractérisé en ce que** les premier et second angles (α1 et α2) sont dirigés l'un contre l'autre et présentent la même valeur.

5. Corps de contact selon l'une des revendications précédentes, **caractérisé en ce que** les premier et second angles (α1 et α2) s'élèvent respectivement à environ 45°.

6. Corps de contact selon l'une des revendications précédentes, **caractérisé en ce que** les segments d'axe d'ondulation (24, 25 ; 24', 25') s'étendant approximativement de manière perpendiculaire par rapport aux bords longitudinaux (4, 5) présentent respectivement une longueur axiale qui correspond à entre 5 et 15% de la longueur totale de la couche de matériau (10, 10') mesurée entre leurs bords longitudinaux (4 et 5) et perpendiculairement à ceux-ci.

7. Corps de contact selon l'une des revendications précédentes, **caractérisé en ce qu'**au moins une zone de bord (40, 50) de chaque couche de matériau (10, 10') partant d'un des bords longitudinaux (4, 5) présente une plus grande épaisseur de matériau.

8. Corps de contact selon la revendication 7, **caractérisé en ce que** la zone de bord (40, 50) partant d'un des bords longitudinaux (4, 5) et présentant une plus grande épaisseur de matériau est une zone de bord (40) du côté de l'afflux de gaz.

9. Corps de contact selon l'une des revendications 1 à 8, **caractérisé en ce que** respectivement deux couches de matériau voisines (10, 10') sont accolées l'une à l'autre avec des axes d'ondulation (2, 2') se croisant dans les sections inclinées (21, 21'; 22, 22').

10. Corps de contact selon l'une des revendications 1 à 8, **caractérisé en ce que** respectivement deux couches de matériau voisines (10, 10') sont accolées l'une à l'autre avec des axes d'ondulation (2, 2') parallèles les uns par rapport aux autres.

11. Corps de contact selon l'une des revendications précédentes, **caractérisé en ce que** la hauteur d'ondulation des couches de matériau ondulées (10, 10') est comprise entre 6 et 10 mm et s'élève de préférence à environ 8 mm.

12. Corps de contact selon l'une des revendications précédentes, **caractérisé en ce qu'**est disposée respectivement une couche de matériau plate supplémentaire conçue sans ouverture ou de manière ajourée entre deux couches de matériau ondulées (10, 10').

13. Corps de contact selon l'une des revendications précédentes, **caractérisé en ce que** la matière thermoplastique formant les couches de matériau (10, 10') présente une teinte sombre, de préférence noire.

14. Corps de contact selon la revendication 13, **caractérisé en ce que** la matière thermoplastique formant les couches de matériau (10, 10') est teintée au noir de carbone activé.

15. Corps de contact selon l'une des revendications précédentes, **caractérisé en ce que** les couches de matériau (10, 10') présentent, en plus de leurs ondulations, des structures (11, 11') qui sont plus petites par rapport à ces ondulations et produisent des turbulences ou les augmentent.

16. Corps de contact selon la revendication 15, **caractérisé en ce que** les structures (11, 11') sont formées par des empreintes dans les couches de matériau (10, 10').

17. Corps de contact selon l'une des revendications précédentes, **caractérisé en ce que** les liaisons de soudage et/ou de collage et/ou de forme (6) reliant les couches de matériau (10, 10') entre elles sont des liaisons ponctuelles dans des sections de surface se touchant de deux couches de matériau (10, 10') voisines.

18. Corps de contact selon l'une des revendications précédentes, **caractérisé en ce que** le plastique est du polypropylène (PP) ou du polyéthylène (PE) ou du polystyrène (PS) ou du chlorure de polyvinyle (PVC).

19. Humidificateur à évaporation ou échangeur de substances (7) avec au moins un corps de contact (1) selon l'une des revendications précédentes, **caractérisé en ce que** le corps de contact (1) est disposé sous forme d'un élément de type paroi dans l'humidificateur à évaporation ou l'échangeur de substances (7), sachant que les couches de matériau (10, 10') avec des bords longitudinaux (4, 5) s'étendant à la verticale sont situées sur des plans verticaux, et que la longueur des couches de matériau (10, 10') définissant l'épaisseur du corps de contact (1) est, entre leurs bords longitudinaux (4, 5), plus petite qu'une hauteur et une largeur du corps de contact (1).

20. Humidificateur à évaporation ou échangeur de substances selon la revendication 19, **caractérisé en ce que** le gaz pouvant être conduit à travers le corps de contact (1) est de l'air ou de l'air chargé en substances nocives ou polluantes gazeuses et/ou liquides et/ou solides.

21. Humidificateur à évaporation ou échangeur de substances selon la revendication 19 ou 20, **caractérisé en ce que** le liquide pouvant être conduit à travers le corps de contact (1) est de l'eau ou un acide ou un produit alcalin.

22. Humidificateur à évaporation ou échangeur de substances selon l'une des revendications 19 à 21, **caractérisé en ce que** l'au moins un corps de contact (1) est maintenu de telle manière dans un cadre de fixation (71) de l'humidificateur à évaporation ou de l'échangeur de substances (7) qu'il peut être détaché et remplacé.

23. Humidificateur à évaporation ou échangeur de substances selon l'une des revendications 19 à 22, **caractérisé en ce que** lui est/sont associé(e)(s) au moins une pompe de circulation (72) pour le liquide à conduire à travers le corps de contact (1) et/ou au moins un ventilateur (76) pour le gaz à conduire à travers le corps de contact (1).
